# DEMANDE DE BREVET EUROPEEN

(11) **EP 1 241 214 A1**
(43) Date de publication de la demande: **18.09.2002**
(21) Numéro de dépôt: 02290676.2
(22) Date de dépôt: 18.03.2002
(51) Int. Cl.: C08L 1/02, C08K 7/00, C08K 5/098, C10M 105/24, C10M 171/06

(54) **Mélange lubrifiant sous forme de granules, procédé de fabrication et utilisation**

(30) Priorité: 16.03.2001 FR 0103613
(71) Demandeur: CELTA, F-92200 NEUILLY SUR SEINE (FR)
(72) Inventeur: Van Delft, Baudoin, 63190 Orleat (FR); Benammar, Rachid, 69170 Tarare (FR); Watine, Jean-Luc, 03200 Le Vernet (FR)
(74) Mandataire: Vercaemer, Laurence

(57) **Abrégé**

L'invention a pour objet un mélange lubrifiant sous forme de granulés comprenant un lubrifiant, un ou des matériaux cellulosiques, et un ou des liants organiques. Le lubrifiant est choisi parmi les stéarates, en particulier les stéarates métalliques, tels que le stéarate de zinc, le stéarate de magnésium, le stéarate de plomb, le stéarate de baryum, le stéarate d'aluminium, le stéarate de cadmium, et d'autres stéarates, tels que le stéarate de calcium, le monostéarate de glycérol ; les béhénates, tels que l'acide docosanoïque ; les palmitates, tels que le palmitate de cétyle (hexadécyl hexadécanoate) ; seuls ou en mélange.

L'invention a également pour objet l'utilisation du mélange lubrifiant pour la fabrication d'un matériau compact repulpable, et le procédé de préparation du mélange lubrifiant.

## Description

L'invention a pour objet un nouveau mélange lubrifiant sous forme de granulés. Elle a également pour objet le procédé de fabrication dudit mélange lubrifiant, et l'utilisation du mélange lubrifiant pour la fabrication de matériaux compacts repulpables.

Par l'expression « matériau compact », on entend, au sens de la présente invention, un matériau présentant une cohésion et une résistance mécanique suffisantes pour pouvoir être utilisé par exemple dans l'industrie de l'ameublement, dans l'industrie de la construction (par exemple pour la fabrication de panneaux ou de cloisons), dans l'industrie horticole (par exemple pour la fabrication de plateaux pour plantes en pots) ou dans l'industrie de l'emballage (par exemple pour la fabrication de palettes, d'éléments de support, de cales, d'éléments d'espacement, etc.).

Par l'expression « repulpable », on entend, toujours au sens de la présente invention, la propriété qu'a le matériau de pouvoir être utilisé directement, après un broyage éventuel, comme matière première dans la fabrication du papier, sans nécessiter aucune opération de triage ou de séparation physique, mécanique, ou physico-chimique, et sans générer d'autres déchets que les déchets normalement produits lors de la fabrication du papier. Un tel matériau repulpable peut donc être automatiquement introduit au niveau du pulper de la machine à papier, sans opération de tri préalable.

On connaît déjà des matériaux compacts repulpables, à base de matériaux cellulosiques. On citera en particulier le brevet EP 664 357, au nom de la Demanderesse, décrivant un matériau compact résistant à l'eau, à base de matériaux cellulosiques broyés, repulpable, comprenant, d'une part, une quantité efficace d'un liant organique et, d'autre part, une quantité efficace d'un agent de résistance à l'eau.

Le matériau selon le brevet EP 664 357 remplace avantageusement les matériaux à base de bois et de dérivés du bois, difficilement réutilisables.

Cependant, il s'avère qu'un tel matériau présente des inconvénients dans certains cas. Plus précisément, il s'est avéré que les résultats attendus lors de la fabrication de certaines formes complexes, tels que certains profilés de calage, ou lors de fabrication à haut débit, n'étaient pas totalement satisfaisants. Ainsi, on observe parfois des problèmes d'instabilité dimensionnelle, de dégradation thermique du produit fabriqué et, souvent, on finit par encrasser la vis de l'extrudeuse et boucher la filière. En effet, du fait de l'encrassage, l'extrusion nécessite une énergie mécanique de plus en plus élevée. Dans le cas de formes complexes ou à un débit élevé, l'extrudeuse n'est tout simplement plus assez puissante pour atteindre le niveau d'énergie requis. Cet inconvénient n'apparaît pas lors de la fabrication de formes simples ou à faible débit.

La Demanderesse a donc cherché à développer un nouveau matériau compact, de préférence résistant à l'eau, permettant d'éliminer les problèmes de blocage de la filière, tout en conservant des qualités de repulpabilité.

En résolvant ce problème, la Demanderesse a conçu et mis au point un nouveau lubrifiant.

L'invention a donc pour objet un lubrifiant sous forme de granulés de mélange lubrifiant. Le mélange lubrifiant sous forme de granulés selon la présente invention comprend un lubrifiant, un ou des matériaux cellulosiques, et un ou des liants organiques.

Le(s) matériau(x) cellulosique(s) est(sont) choisi(s) parmi les matériaux cellulosiques broyés, les fibres et poussière de cellulose. Les matériaux cellulosiques broyés peuvent être des dérivés du bois, du carton, du carton ondulé, du papier, par exemple des fibres de papier. Le terme « matériaux cellulosiques broyés » désigne des matériaux ayant subi un broyage, par exemple avec un broyeur à couteaux ou un broyeur à marteau, de préférence avec un broyeur à couteaux, c'est-à-dire des matériaux cellulosiques sous forme de fragments. Les matériaux cellulosiques utilisés sont de préférence de dimensions telles qu'ils passent au travers d'une grille de tamisage de dimensions 3x3 mm ou 4x4 mm maximum.

Le lubrifiant présent dans les granulés est choisi parmi les stéarates, en particulier les stéarates métalliques, tels que le stéarate de zinc, le stéarate de magnésium, le stéarate de plomb, le stéarate de baryum, le stéarate d'aluminium, le stéarate de cadmium, et d'autres stéarates, tels que le stéarate de calcium, le monostéarate de glycérol ; les béhénates, tels que l'acide docosanoïque ; les palmitates, tels que le palmitate de cétyle (hexadécyl hexadécanoate) ; seuls ou en mélange. Le lubrifiant sera de préférence un ou des stéarates présentant un point de fusion de l'ordre de 60°C à 170°C plus préférentiellement de l'ordre de 100°C à 150°C. Un stéarate particulièrement préféré est le stéarate de zinc.

Le liant organique est choisi dans le groupe comprenant les amidons, les dérivés d'amidon (par exemple les dextrines), les farines, les protéines (par exemple les collagènes, albumines, ou caséines), les sous-produits d'amidonnerie et de féculerie, les celluloses et leurs dérivés, les hémicelluloses et leurs dérivés, les pectines, ainsi que les mélanges de ces produits.

Le terme « amidon » désigne un amidon de toute origine, naturel ou hybride, provenant par exemple de la pomme de terre, du manioc, du maïs, du maïs cireux, du maïs à haute teneur en amylose, du blé et des coupes qui peuvent en être faites, de l'orge et du sorgho. Le terme « dérivé d'amidon » désigne un amidon modifié par voie physique et/ou chimique.

Si on choisit l'amidon, on utilisera de préférence sous forme de farine ou de semoule, en particulier la fécule de pomme de terre.

Les granulés de mélange lubrifiant comprennent de préférence, en poids par rapport au poids total des constituants avant le traitement de mise en forme,
- de 40% à 60%, de préférence de 45% à 55%, et plus préférentiellement de 50% à 54%, de lubrifiant(s),
- de 20% à 40%, de préférence de 25% à 35 %, et plus préférentiellement de 29% à 33%, de liant(s) organique(s),
- de 10% à 20%, de préférence de 12% à 18 %, et plus préférentiellement de 15% à 16%, de matériaux cellulosiques broyés.

Le mélange lubrifiant sous forme de granulés conforme à l'invention peut également comprendre d'autres constituants tels que, par exemple, des bactéricides, des fongicides, des raticides.

Les granulés de mélange lubrifiant sont préparés par tout procédé approprié connu de l'homme de l'art. Le procédé de préparation d'un mélange lubrifiant sous forme de granulés selon l'invention peut comprendre une étape de mélange des constituants suivie d'un traitement de mise en forme du mélange. Le traitement de mise en forme peut être par exemple une extrusion ou une « pelletisation ».

Si on prépare le mélange lubrifiant sous forme de granulés par extrusion, un procédé utilisable est le suivant : on mélange les quantités appropriées de lubrifiant, de liant organique et de matériaux cellulosiques dans un malaxeur, en même temps qu'on ajoute une quantité appropriée d'eau ; le mélange obtenu est ensuite extrudé pour être transformé en granulés. On peut utiliser comme extrudeuse une extrudeuse EREMA. Les température et pression d'extrusion pourront aisément être déterminées par l'homme de l'art. En tout état de cause, des température et pression moyennes sont utilisables.

Si on prépare le mélange lubrifiant sous forme de granulés par pelletisation, deux types d'appareillages peuvent être utilisés.

Le premier type d'appareillage comprend un cylindre vertical, muni d'un tamis horizontal circulaire formant une filière, et de galets crantés tournants. L'entrée du mélange se fait par le haut du cylindre. Dans le cylindre, les galets crantés tournants écrasent le mélange et le forcent au travers des orifices ou canaux de la filière, formant ainsi les granulés, qui sont coupés par un ou plusieurs couteaux rotatifs présents à l'extérieur du cylindre ; les couteaux rotatifs tournant à la même vitesse que les galets crantés.

Le deuxième type d'appareillage comprend un tambour horizontal percés de plusieurs orifices ou canaux (formant une filière), dans lequel tournent plusieurs galets. Les galets tournants forcent le mélange au travers des orifices ou canaux vers l'extérieur, où les granulés sont coupés par le ou les couteaux rotatifs.

Dans ces procédés de pelletisation, on ne chauffe pas l'appareillage, mais la température peut monter jusqu'à 100°C par simple friction mécanique, en fonction de la teneur en lubrifiant et de la teneur en eau, ce qui permet la gélatinisation du liant organique tel que l'amidon. De plus, la longueur des orifices ou canaux, c'est-à-dire l'épaisseur de la filière, a un effet sur la densité en vrac des granulés obtenus.

Les granulés de mélange lubrifiant peuvent être sensiblement sphériques ou cylindriques. S'ils sont sphériques ou sensiblement sphériques, ils ont de préférence un diamètre de l'ordre de 1 mm à 5 mm, de préférence de l'ordre de 2 mm à 4 mm, par exemple de l'ordre de 3 mm. S'ils sont cylindriques ou sensiblement cylindriques, ils ont de préférence une longueur de l'ordre de 1 mm à 7 mm, de préférence de l'ordre de 2 mm à 5 mm.

Les granulés préparés par extrusion présentent de préférence une densité en vrac de l'ordre de 0,2 à 0,7, de préférence encore de l'ordre de 0,3 à 0,5. Les granulés préparés par pelletisation présentent de préférence une densité en vrac de l'ordre de 0,5 à 0,9, de préférence encore de 0,5 à 0,7.

D'une manière générale, on observe que les granulés formés par extrusion sont sensiblement sphériques, alors que les granulés formés par pelletisation sont plus allongés (longueur de 1,5 à 2,5 fois le diamètre).

La teneur en eau du mélange lubrifiant sous forme de granulés avant le traitement de mise en forme est de l'ordre de 3% à 20% en poids, de préférence de l'ordre de 5 à 15% en poids.

L'utilisation de mélange lubrifiant sous forme de granulés permet de réaliser sans problème des matériaux compacts repulpables fabriquables sous des formes complexes et/ou avec un débit élevé. L'invention a donc également pour objet l'utilisation du mélange lubrifiant sous forme de granulés pour la fabrication d'un matériau compact repulpable. Les matériaux obtenus ont une surface très lisse et brillante. L'effort en terme de couple ou de pression nécessaire à l'extrusion d'un boudin ou profilé est de l'ordre de 2 à 5 fois moindre que quand le lubrifiant n'est pas utilisé.

Le lubrifiant est ajouté en une quantité efficace aux composants habituels d'un matériau compact repulpable. Ces composants sont tels que ceux décrits dans le brevet EP 664 357 précédemment cité, à savoir des matériaux cellulosiques broyés et un liant organique, auquel peut être ajouté un agent de résistance à l'eau ou agent hydrofugeant.

On désigne par « quantité efficace », dans la présente demande, la quantité suffisante pour obtenir l'effet recherché.

Le matériau compact repulpable, à base de matériaux cellulosiques broyés, comprend une quantité efficace d'un liant organique tel que défini ci-dessus, et comprend en outre une quantité efficace d'un mélange lubrifiant sous forme de granulés selon la présente invention, le matériau étant fabriquable sous des formes complexes.

Le matériau cellulosique broyé est tel que défini ci-dessus. Le broyage génère inévitablement de la poussière de fibres cellulosiques, de dimensions très faibles, de l'ordre de 1 à 2 mm voire moins. On limite de préférence la présence de cette poussière à 10% maximum en poids par rapport au poids total de matériau cellulosique, afin de limiter les inconvénients qui en découlent. En effet, la poussière est explosive en raison des charges électrostatiques ; la réglementation impose d'ailleurs un faible taux de poussière. De plus, elle absorbe beaucoup d'eau et de liant, et le mélange obtenu contient des agglomérats et est donc hétérogène, et il difficile à transformer.

Dans un mode de réalisation préférentiel, le matériau comprend en outre une quantité efficace d'un agent de résistance à l'eau choisi parmi les agents hydrofugeants organosiliciques et les copolymères acryliques fluorés

En effet, le matériau sera de préférence résistant à l'eau. Cette caractéristique est rendue nécessaire par certains utilisations du matériau conforme à l'invention, en particulier lorsqu'il est susceptible d'être utilisé dans des atmosphères humides voire très humides, ou lorsqu'il est susceptible d'être mis en contact avec des sols humides.

Le lubrifiant est présent dans le matériau compact repulpable sous forme de granulés de mélange lubrifiant, avantageusement en une quantité de l'ordre de 0,4% à 5%, de préférence de l'ordre de 0,8 à 4%, plus préférentiellement encore de l'ordre de 1% à 2,5%, les quantités étant exprimées en poids par rapport au poids total du matériau compact repulpable avant traitement de mise en forme.

Ledit matériau compact comprend avantageusement, par rapport au poids de matériaux cellulosiques broyés, une proportion de 0,5% à 40%, de préférence de 1% à 25%, et plus préférentiellement encore de 2% à 20%, en poids de liant organique.

Lorsque le matériau compact est résistant à l'eau, il comprend de manière préféré une proportion de 0,005% à 10%, de préférence de 0,025% à 6%, et plus préférentiellement encore de 0,05% à 4%, d'agent hydrofugeant en poids par rapport au poids de matériaux cellulosiques broyés.

La proportion d'agent hydrofugeant est, in fine, calculée de façon à conférer au matériau compact une tenue à l'eau satisfaisante, sachant que l'objectif principal visé par l'invention est d'assurer la repulpabilité du matériau obtenu.

Le matériau compact peut également comprendre d'autres constituants tels que, par exemple, des bactéricides, des fongicides, des raticides.

Il peut également comprendre des agents durcisseurs, présents en une proportion de 0,5% à 25%, de préférence 1 à 5%, en poids par rapport au poids de matériaux cellulosiques broyés.

Les agents durcisseurs en question peuvent être choisis dans le groupe des agents alcalins, plus particulièrement dans le groupe des hydroxydes et oxydes de métaux alcalins ou alcalino-terreux, ou dans le groupe des sels de bases fortes ou de bases faibles, et notamment parmi les carbonates de métaux alcalins ou alcalino-terreux. L'agent durcisseur préféré est constitué par la chaux hydratée.

La teneur en eau, avant traitement de mise en forme, du matériau repulpable comprenant le mélange lubrifiant sous forme de granulés selon l'invention est de l'ordre de 3% à 20% en poids, de préférence de l'ordre de 4 à 15% en poids.

Le matériau compact repulpable obtenu après le traitement de mise en forme présente une densité de 0,8 à 1,5, de préférence 0,9 à 1,3, plus préférentiellement 1,0 à 1,2.

Les matériaux compacts repulpables peuvent être mis en forme par tout procédé approprié, par exemple par pression, compression, agglomération, compactage, injection. Le brevet EP 664 357 cité précédemment décrit un procédé possible d'extrusion.

Un procédé de préparation du matériau compact repulpable est le suivant :
- sélection d'un matériau cellulosique broyé, d'un liant organique, d'un mélange lubrifiant sous forme de granulés, éventuellement d'autres composants,
- mélange des composés dans un ordre quelconque,
- traitement de mise en forme du mélange ainsi obtenu, par exemple par pression, compression, agglomération, compactage ou extrusion.

La Demanderesse a observé que l'utilisation de granulés de mélange lubrifiant selon l'invention permet d'obtenir une meilleure dispersion du lubrifiant dans le matériau compact repulpable, et donc une meilleure efficacité du lubrifiant.

Les granulés de mélange lubrifiant selon l'invention peuvent également être utilisés notamment en plasturgie comme additif de lubrification et de renfort.

L'invention est illustrée plus en détails au moyen des exemples suivants de préparation de lubrifiant sous forme de granulés, et de préparation de matériau compact repulpable comprenant un lubrifiant.

### EXEMPLE 1

Dans un malaxeur, on introduit, d'une part, 10 kg de stéarate de zinc, et d'autre part, 6 kg d'amidon de fécule de pomme de terre et 3 kg de fibres de papier (poussière de papier). On ajoute progressivement et durant le malaxage 1,5 l d'eau. On malaxe le mélange pendant 15 minutes. Le mélange obtenu est introduit dans la trémie d'une extrudeuse de laboratoire pour être transformé en granulés. Les températures d'extrusion sont 20°, 40°, 60°C et la pression est d'environ 15 bars.

On obtient ainsi des granulés sphériques d'environ 3 mm de diamètre, présentant une cohésion suffisante pour pouvoir servir à la lubrification durant l'extrusion à chaud de produits et articles repulpables. La densité en vrac de ces granulés varie de 0,3 à 0,5.

Les granulés lubrifiants sont introduits dans un doseur et sont ajoutés de façon contrôlée dans la trémie d'une extrudeuse afin d'extruder des profilés à partir de carton broyé (65% en poids) et d'amidon (29% en poids). Le lubrifiant, apporté sous forme de granulés, est présent à hauteur de 6% en poids. Le mélange avant extrusion comprend 15% d'eau par rapport à la matière sèche. La densité des profilés est de 1,2.

L'extrusion de profilés a été faite sans poser de problème de dégradation de la matière ni de bouchage de la filière.

### EXEMPLE 2

Dans un malaxeur, on introduit, d'une part, 10 kg de stéarate de calcium, et d'autre part, 6 kg d'amidon de fécule de pomme de terre et 3 kg de fibres de papier (poussière de papier). On ajoute progressivement et durant le malaxage 1,5 1 d'eau. On malaxe le mélange pendant 15 minutes. Le mélange obtenu est introduit dans la trémie d'une extrudeuse de laboratoire pour être transformé en granulés. Les températures d'extrusion sont 35°, 60°, 80°C et la pression est d'environ 15 bars.

On obtient ainsi des granulés sphériques d'environ 3 mm de diamètre, présentant une cohésion suffisante pour pouvoir servir à la lubrification durant l'extrusion à chaud de produits et articles repulpables. La densité en vrac de ces granulés varie de 0,3 à 0,5.

Les granulés lubrifiants sont introduits dans un doseur et sont ajouté de façon contrôlée dans la trémie d'une extrudeuse afin d'extruder des profilés à partir de carton broyé et d'amidon, dans les mêmes proportions que dans l'exemple 1. Le mélange avant extrusion comprend 15% d'eau par rapport à la matière sèche. La densité des profilés est de 1,2.

L'extrusion de profilés a été faite sans poser de problème de dégradation de la matière ni de bouchage de la filière.

### EXEMPLE 3

Dans un malaxeur, on introduit, d'une part, 6 kg de stéarate de zinc, et d'autre part, 4 kg de stéarate de calcium, 6 kg d'amidon de fécule de pomme de terre et 3 kg de fibres de papier (poussière de papier). On ajoute progressivement et durant le malaxage 1,5 l d'eau. On malaxe le mélange pendant 15 minutes. Le mélange obtenu est introduit dans la trémie d'une extrudeuse de laboratoire pour être transformé en granulés. Les températures d'extrusion sont 30°, 50°, 70°C et la pression est d'environ 15 bars.

On obtient ainsi des granulés sphériques d'environ 3 mm de diamètre, présentant une cohésion suffisante pour pouvoir servir à la lubrification durant l'extrusion à chaud de produits et articles repulpables. La densité en vrac de ces granulés varie de 0,3 à 0,5.

Les granulés lubrifiants sont introduits dans un doseur et sont ajouté de façon contrôlée dans la trémie d'une extrudeuse afin d'extruder des profilés à partir de carton broyé et d'amidon, dans les mêmes proportions que dans l'exemple 1. Le mélange avant extrusion comprend 15% d'eau par rapport à la matière sèche. La densité des profilés est de 1,2.

L'extrusion de profilés a été faite sans poser de problème de dégradation de la matière ni de bouchage de la filière.

### EXEMPLE 4

Dans un malaxeur, on introduit, d'une part, 5.5 kg de stéarate de zinc, et d'autre part, 4,3 kg de stéarate de calcium, 6 kg d'amidon de fécule de pomme de terre et 3 kg de fibres de papier (poussière de papier). On ajoute progressivement et durant le malaxage 1,5 l d'eau, on arrête le malaxage pour l'addition de 0,2 kg de monostéarate de glycérol au mélange. On malaxe le mélange pendant 15 minutes. Le mélange obtenu est introduit dans la trémie d'une extrudeuse de laboratoire pour être transformé en granulés. Les températures d'extrusion sont 40°, 50°, 70°C et la pression est de 10 bars.

On obtient ainsi des granulés sphériques d'environ 3 mm de diamètre, présentant une cohésion suffisante pour pouvoir servir à la lubrification durant l'extrusion à chaud de produits et articles repulpables. La densité en vrac de ces granulés varie de 0,3 à 0,5.

Les granulés lubrifiants sont introduits dans un doseur en même temps que les autres composants du mélange compact repulpable, et sont ajoutés de façon contrôlée dans la trémie d'une extrudeuse afin d'extruder des profilés à partir de carton broyé et d'amidon.

On ajoute 3,2% de granulés à un mélange sous forme de pellets, le mélange comprenant 10% d'eau, 25% d'amidon de mais et 65% de papier broyé (5 mm).

L'extrusion de profilés a été faite sans poser de problème de dégradation de la matière ni de bouchage de la filière.

## Revendications

1. Mélange lubrifiant sous forme de granulés comprenant un lubrifiant, un ou des matériaux cellulosiques, et un ou des liants organiques.

2. Mélange lubrifiant selon la revendication 1, **caractérisé en ce que** le(s) matériau(x) cellulosique(s) est(sont) choisi(s) parmi les matériaux cellulosiques broyés, les fibres et poussière de cellulose.

3. Mélange lubrifiant selon l'une ou l'autre des revendications 1 et 2, **caractérisé en ce que** le lubrifiant est choisi parmi les stéarates, en particulier les stéarates métalliques, tels que le stéarate de zinc, le stéarate de magnésium, le stéarate de plomb, le stéarate de baryum, le stéarate d'aluminium, le stéarate de cadmium, et d'autres stéarates tels que le stéarate de calcium, le monostéarate de glycérol ; les béhénates, tels que l'acide docosanoïque ; les palmitates, tels que le palmitate de cétyle (hexadécyl hexadécanoate) ; seuls ou en mélange.

4. Mélange lubrifiant selon l'une quelconque des revendications 1 à 3, **caractérisé en ce que** le lubrifiant est choisi parmi les stéarates présentant un point de fusion de l'ordre de 60°C à 170°C, de préférence de l'ordre de 100°C à 150°C, plus préférentiellement le stéarate de zinc.

5. Mélange lubrifiant selon l'une quelconque des revendications 1 à 4, **caractérisé en ce que** le liant organique est de l'amidon sous forme de farine ou de semoule, en particulier de la fécule de pomme de terre.

6. Mélange lubrifiant selon l'une quelconque des revendications 1 à 5, **caractérisé en ce qu'**il comprend, en poids par rapport au poids total des constituants avant le traitement de mise en forme,
- de 40% à 60%, de préférence de 45% à 55%, et plus préférentiellement de 50% à 54%, de lubrifiant(s),
- de 20% à 40%, de préférence de 25% à 35 %, et plus préférentiellement de 29% à 33 de liant(s) organique(s),
- de 10% à 20%, de préférence de 12% à 18 %, et plus préférentiellement de 15% à 16%, de matériaux cellulosiques.

7. Mélange lubrifiant selon l'une quelconque des revendications 1 à 6, sous forme de granulés sphériques ou sensiblement sphériques dont le diamètre est de l'ordre de 1 mm à 5 mm, de préférence de l'ordre de 2 mm à 4 mm, par exemple de l'ordre de 3 mm ; ou de granulés cylindriques ou sensiblement cylindriques dont la longueur est de l'ordre de 1 mm à 7 mm, de préférence de l'ordre de 2 mm à 5 mm.

8. Mélange lubrifiant selon l'une quelconque des revendications 1 à 7, **caractérisé en ce qu'**il présente une densité en vrac de l'ordre de 0,2 à 0,7, de préférence de l'ordre de 0,3 à 0,5.

9. Mélange lubrifiant selon l'une quelconque des revendications 1 à 7, **caractérisé en ce qu'**il présente une densité en vrac de l'ordre de 0,5 à 0,9, de préférence de 0,5 à 0,7.

10. Mélange lubrifiant selon l'une quelconque des revendications 1 à 9, **caractérisé en ce qu'**il présente une teneur en eau avant traitement de mise en forme de l'ordre de 3% à 20% en poids, de préférence de l'ordre de 5% à 15% en poids.

11. Procédé de préparation d'un mélange lubrifiant selon l'une quelconque des revendications 1 à 10, comprenant une étape de mélange des constituants suivie d'un traitement de mise en forme du mélange.

12. Procédé de préparation selon la revendication 11, **caractérisé en ce que** le traitement de mise en forme est une extrusion ou une pelletisation.

13. Utilisation d'un mélange lubrifiant selon l'une quelconque des revendications 1 à 10 pour la fabrication d'un matériau compact repulpable.

14. Matériau compact repulpable à base de matériaux cellulosiques broyés comprenant une quantité efficace d'un lubrifiant sous forme de mélange lubrifiant selon l'une quelconque des revendications 1 à 10.
